# EUROPÄISCHE PATENTANMELDUNG

(11) **EP 0 860 311 A1**
(43) Veröffentlichungstag der Anmeldung: **26.08.1998**
(21) Anmeldenummer: 98102186.8
(22) Anmeldetag: 09.02.1998
(51) Int. Cl.: B60J 7/14, B60J 7/20, B60J 7/22

(54) **Variabler Verdeckkasten für ein Cabriolet**

(30) Priorität: 19.02.1997 DE 19706398
(71) Anmelder: Daimler-Benz Aktiengesellschaft, 70567 Stuttgart (DE)
(72) Erfinder: Ellenrieder, Gunther, 73760 Ostfilfern (DE); Kristl, Rainer, 73249 Wernau (DE); Martens, Dieter, 71297 Mönsheim (DE); Wagner, Oliver, 70794 Filderstadt (DE)

(57) **Zusammenfassung**

Ein Hardtop für ein Cabriolet ist mit einem durch seitliches Faltgestänge (14) verstellbaren Vorderdachteil (1) und Heckdachteil (2), mit einer festen Heckscheibe und mit einem Verdeckkasten (5) zur Aufnahme der beiden Dachteile versehen. Der Verdeckkasten (5) ist variabel derart ausgebildet, daß er in geschlossenem Zustand des Daches einen Teil einer Fondsitzbank bildet, und daß bei geöffnetem Verdeck ein Teil der Fondsitzbank zur Vergrößerung des Verdeckkastens (5) nach vorne klappbar ist.

## Beschreibung

Die Erfindung betrifft einen variablen Verdeckkasten für ein Cabriolet nach der im Oberbegriff von Anspruch 1 näher definierten Art.

Aus der DE 43 30 411 C1 ist ein gattungsgemäßer Verdeckkasten bekannt.

Nachteilig bei diesem Verdeckkasten ist jedoch der sehr hohe Platzbedarf der abgelegten Verdeckteile im Kofferraum des Fahrzeugs.

Des weiteren ist aus der DE 195 14 785 A1 ein Fahrzeug mit einem Klappverdeck bekannt, bei welchem der Verdeckkasten im geschlossenen Zustand des Daches einen Teil einer Fondsitzbank bildet.

Auch hierbei tritt jedoch der Nachteil des hohen Platzbedarfs der abgelegten Verdeckteile auf.

Zum Stand der Technik bei Hardtops für Cabriolets bzw. bei Verdeckkasten für Cabriolets wird weiterhin z.B. auf die DE-OS 1 505 494 verwiesen. Auch die DE 40 38 873 betrifft ein Cabrio-Verdeck aus Stahlblech mit einer Heckscheibe aus Glas, wobei das Verdeck in ein Vorderdachteil und ein Heckdachteil geteilt ist. Wenn das Fahrzeug offen als Cabriolet gefahren werden soll, werden die beiden Dachteile bzw. Verdeckteile im Kofferraum des Fahrzeuges abgelegt. Gleiches gilt für die DE 37 33 892.

Die japanische Offenlegungsschrift 62-8818 zeigt ein Fahrzeug mit einem Vorderdachteil und einem Heckdachteil nebst fester Heckscheibe, wobei die Dachteile in einem Verdeckkasten abgelegt werden.

Nachteilig bei diesen bekannten Hardtop-Fahrzeugen ist jedoch ebenfalls, daß die Ablage der Dachteile nebst dem dazugehörigen Faltgestänge in Cabriolet-Position ein erhebliches Kofferraumvolumen beansprucht.

Der vorliegenden Erfindung liegt die Aufgabe zugrunde, einen variablen Verdeckkasten für ein Cabriolet der eingangs erwähnten Art zu schaffen, bei dem die Dachteile im abgelegten Zustand, d.h. in Cabriolet-Position des Fahrzeuges, kein so großes Kofferraumvolumen benötigen, wobei gleichzeitig die Vorteile der Nutzung des Verdeckkastens als Teil der Fondsitzbank erhalten bleiben sollen.

Erfindungsgemäß wird diese Aufgabe durch die im kennzeichnenden Teil von Anspruch 1 genannten Merkmale gelöst.

Die Anbringung eines Drehhebels an dem Faltgestänge und die erfindungsgemäße Verbindung des Drehhebels mit dem vor Schwenkhebeln des Faltgestänges liegenden Fixpunkt einerseits und dem Heckdachteil andererseits ermöglicht dabei ein versetztes Ablegen des Heckdachteils in Fahrtrichtung nach vorne, wodurch letztendlich ein verringerter Raumbedarf für die abgelegten Dachteile im Kofferraum notwendig ist.

Bei abgelegtem Hardtop stehen zwar die hinteren Sitzplätze des Fahrzeuges nicht zur Verfügung, aber es besteht grundsätzlich die Möglichkeit zur Beförderung von Personen im Fondsitzbereich, wenn das Fahrzeug mit geschlossenem Hardtop gefahren wird.

Vorteilhafte Weiterbildungen und Ausgestaltungen der Erfindung ergeben sich aus den Unteransprüchen und aus dem nachfolgend anhand der Zeichnung prinzipmäßig dargestellten Ausführungsbeispiel.

Es zeigt:
- Fig. 1: ein Fahrzeug während einer Verdeckbetätigung mit nach vorne verlagertem Überrollbügel;
- Fig. 2: das Fahrzeug nach der Fig. 1 mit in einem Verdeckkasten abgelegten Hardtop;
- Fig. 3: einen Verdeckkasten bei geschlossenem Hardtop und mit Fondsitzen für Personen;
- Fig. 4: einen Verdeckkasten in Bereitstellung zur Aufnahme eines Hardtops mit umgeklappten Fondsitzen;
- Fig. 5: eine Seitenansicht in Prinzipdarstellung mit einem Rollo als Abdeckung für abgelegte Dachteile;
- Fig. 6: die Seitenansicht nach der Fig. 5 mit einem Rollo als Windschott bei abgelegtem Hardtop;
- Fig. 7: eine Seitenansicht entsprechend denen nach den Figuren 5 und 6 mit einem Rollo als Sonnenrollo bei geschlossenem Hardtop;
- Fig. 8: Prinzipdarstellung der Kinematik zur Versenkung des Hardtops in Ausgangsstellung;
- Fig. 9: eine Prinzipdarstellung der Kinematik zum Ablegen des Hardtops in einer Zwischenposition; und
- Fig. 10: eine Prinzipdarstellung der Kinematik zum Ablegen des Hardtops in abgelegter Position.

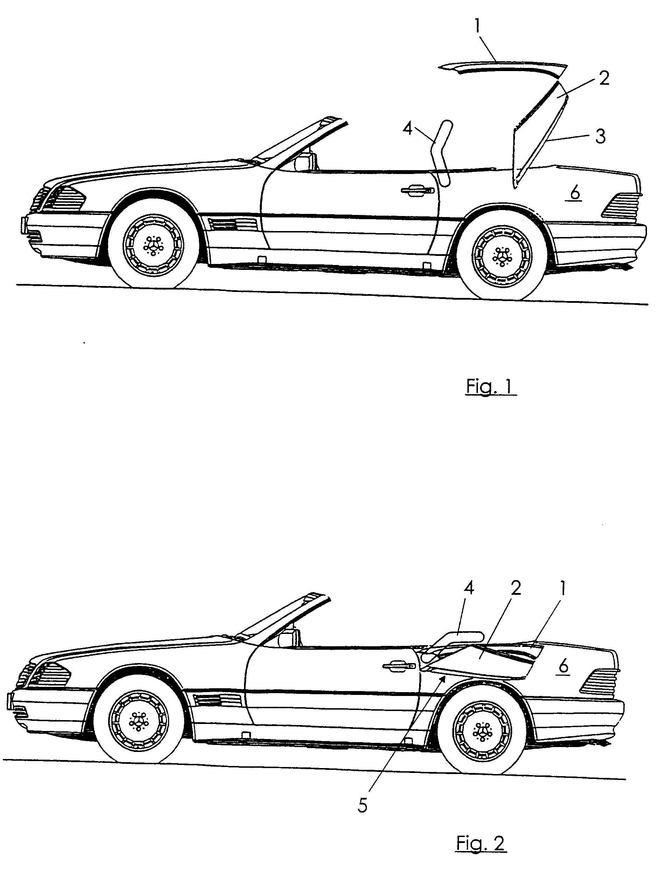

Ein Fahrzeug ist mit einem zweiteiligen Verdeck, nämlich einem Vorderdachteil 1 und einem Heckdachteil 2 mit einer festen Heckscheibe 3 versehen. Weiterhin weist das Fahrzeug einen Überrollbügel 4 auf, der in Fig. 1 leicht nach vorne geschwenkt ist.

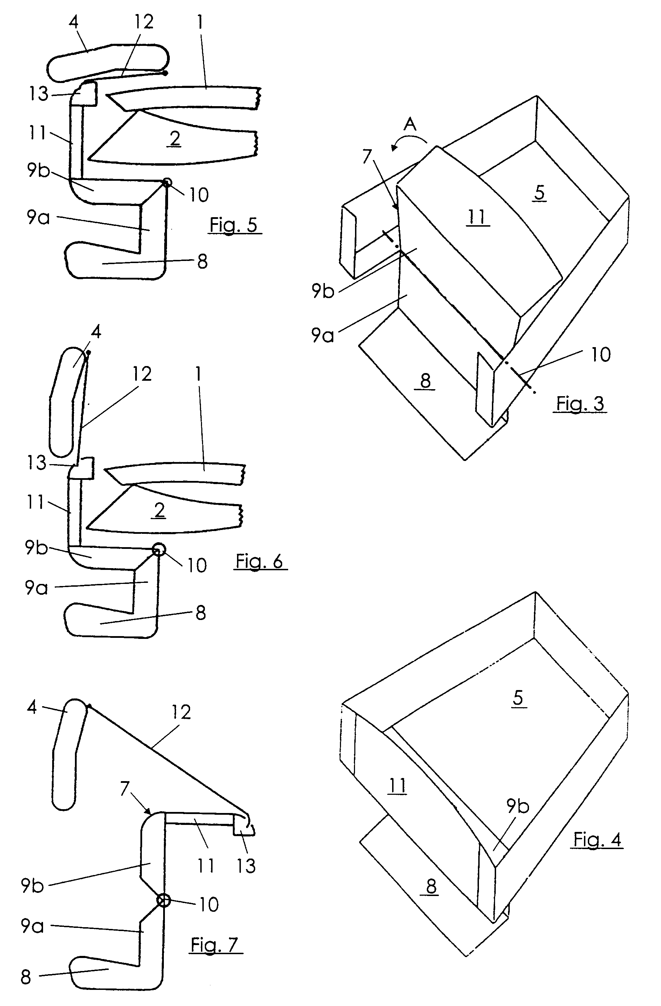

Fig. 2 zeigt das Fahrzeug nach der Fig. 1 mit in einem Verdeckkasten 5 abgelegten Vorderdachteil 1 und Heckdachteil 2, wobei der Überrollbügel 4 auf den abgelegten Dachteilen liegt. Wie ersichtlich, befindet sich dabei der Verdeckkasten 5 nur zu etwas mehr als der Hälfte im Bereich eines Kofferraumes 6 des Fahrzeuges. Der vordere Bereich des Verdeckkastens 5 erstreckt sich über einen Fondsitzbereich.

In den Figuren 3 und 4 ist die Ausgestaltung des Verdeckkastens 5 prinzipmäßig dargestellt. Die Fig. 3 zeigt dabei den Verdeckkasten 5 bei geschlossenem Hardtop. Wie ersichtlich, ist in diesem Falle eine Fondsitzbank 7 vorhanden bzw. bei einer Aufteilung sind zwei einzelne Fondsitze vorhanden. Die dargestellte Fondsitzbank 7 weist einen Fondsitz 8 und eine zweiteilige Fondsitzlehne 9a und 9b auf. Die zweiteilige Fondsitzlehne 9a, 9b besitzt zwischen den beiden Teilen eine horizontale, sich quer zur Fahrzeuglängsrichtung erstreckende Drehachse 10. Die Fondsitzbank 7 ist weiterhin mit einer horizontalen Ablagefläche 11, die als Hutablage ausgebildet sein kann, versehen.

Durch ein Verschwenken des oberen Teiles 9b der Fondsitzlehne im Pfeilrichtung A der Fig. 3 wird der Verdeckkasten 5 nach vorne in Fahrtrichtung deutlich vergrößert.

Fig. 4 zeigt die komplette Größe des Verdeckkastens 5, wie er bereit ist zur Aufnahme des Hardtops. Wie ersichtlich, wird dabei die Hutablage 11 als vorherige horizontale Ablagefläche nunmehr die senkrechte Vorderwand des Verdeckkastens 5. Der obere Teil 9b der Fondsitzlehne wird zum vorderen Bereich des Bodens des Verdeckkastens 5.

Die Figuren 5 bis 7 zeigen verschiedene Möglichkeiten, wie man ein Rollo 12 in das Ganze integriert. Hierzu ist im hinteren Bereich bzw. am hinteren Ende der Ablagefläche 11 ein Rollokasten 13 befestigt. Im eingerollten Zustand befindet sich das Rollo 12 in dem Rollokasten 13.

Gemäß Fig. 5 kann das äußere Ende des Rollos 12 am oberen bzw. hinteren Bereich des Überrollbügels 4 befestigt werden. In einer Stellung nach dieser Figur dient das Rollo 12 als Abdeckung für die abgelegten Dachteile, nämlich Vorderdachteil 1 und Heckdachteil 2.

Fig. 6 zeigt eine Möglichkeit der Verwendung des Rollos 12 als Windschott. In diesem Falle befindet sich der Überrollbügel 4 in einer vertikalen oder nahezu vertikalen Position, womit sich auch das Rollo 12 nahezu vertikal von dem Rollokasten 13 aus nach oben erstreckt.

Fig. 7 zeigt die Verwendung des Rollos 12 als Sonnenrollo bei geschlossenem Hardtop. Gleichzeitig ist aus dieser Figur auch ersichtlich, daß in diesem Falle die Fondsitzbank 7 zur Aufnahme von Personen zur Verfügung steht.

Das Rollo 12 kann bei allen vorstehend genannten drei Funktionen am Überrollbügel 4 befestigt bleiben. Dies bedeutet, um die verschiedenen Rollofunktionen einzustellen, muß lediglich der Überrollbügel 4 betätigt werden.

Wird keine der drei Rollofunktionen gewünscht oder eine bestimmte Funktion nicht gewünscht, so kann das Rollo 12 am Überrollbügel 4 ausgehängt werden. Es wird dann durch eine Aufrollautomatik in den Rollokasten 13 gezogen und dort verstaut.

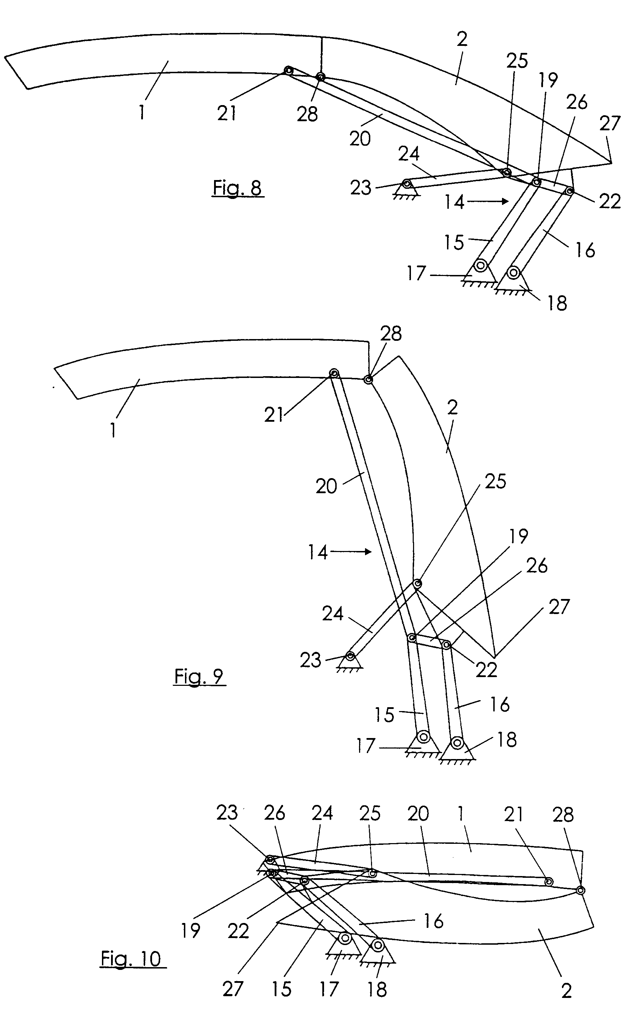

Die Figuren 8 bis 10 zeigen jeweils in Prinzipdarstellung die Kinematik zum Betätigen bzw. Versenken der beiden Dachteile. Hierzu dienen seitliche Faltgestänge 14. Die Faltgestänge 14 weisen jeweils zwei Schwenkhebel 15 und 16 auf, die jeweils mit einem ihrer beiden Enden an einem Fixpunkt 17 bzw. 18 angelenkt sind. Das andere Ende des Schwenkhebels 15 ist über ein Gelenk 19 mit einem Ende eines Hebels 20 verbunden, dessen anderes Ende über ein Gelenk 21 mit dem Vorderdachteil 1 verbunden ist. Das andere Ende des Schwenkhebels 16 ist über ein Gelenk 22 mit dem unteren Bereich des Heckdachteils 2 verbunden.

Etwas oberhalb und - in Fahrtrichtung gesehen - vor den beiden Fixpunkten 17 und 18 befindet sich ein weiterer fahrzeugfester Fixpunkt 23, an dem ein Ende eines Drehhebels 24 angelenkt ist. Das andere Ende des Drehhebels 23 greift etwas oberhalb des Gelenkes 22 an einem weiteren Gelenk 25 an dem Heckdachteil 2 an. Die beiden Gelenke 19 und 22 sind durch eine dazwischenliegende Kurbel 26 miteinander verbunden.

Durch die vorstehend beschriebene Ausgestaltung des Faltgestänges 14 ergibt sich ein Getriebe, das während der Ablegebewegung des Vorderdachteils 1 und des Heckdachteiles 2 dazu führt, daß beide Teile eine Längsverlagerung in Fahrtrichtung nach vorne erfahren. Dies wird durch den Drehhebel 24 in Kombination mit den anderen Hebeln bewirkt. Praktisch stellt das Faltgestänge 14 ein Parallelogramm mit der Kurbel 26 dar. Entsprechend der Kinematik dieses Getriebes durch den Drehhebel 24 verschwenkt dabei der Gelenkpunkt 25 auf einer Kreisbahn um den Fixpunkt 23, wobei während der Absenkbewegung der beiden Dachteile diese um einen beträchtlichen Betrag nach vorne gebracht werden. Dies wird insbesondere aus den drei Positionen eines hinteren Endpunktes 27 des Heckdachteiles 2 im Vergleich der Figuren 9 und 10 ersichtlich. Vorderdachteil 1 und Heckdachteil 2, die über eine Scharniereinrichtung 28 miteinander verbunden sind, kommen auf diese Weise platzsparend - bezogen auf den Kofferraum - in dem Verdeckkasten 5 muschelartig übereinander zu liegen.

## Patentansprüche

1. Variabler Verdeckkasten für ein Cabriolet, welches ein durch seitliche Faltgestänge verstellbares Vorderdachteil und ein Heckdachteil mit einer festen Heckscheibe aufweist, wobei der Verdeckkasten zur Aufnahme der beiden Dachteile vorgesehen und variabel derart ausgebildet ist, daß er im geschlossenen Zustand des Daches einen Teil einer Fondsitzbank bildet, und wobei bei geöffnetem Verdeck ein Teil der Fondsitzbank zur Vergrößerung des Verdeckkastens nach vorne klappbar ist,
**dadurch gekennzeichnet,** daß
das Faltgestänge (14) mit einem Drehhebel (24) versehen ist, dessen eines Ende an einem in Fahrtrichtung vor Schwenkhebeln (15,16) des Faltgestänges (14) liegenden Fixpunkt (23) und dessen anderes Ende am Heckdachteil (2) derart angelenkt ist, daß beim Ablegen der beiden Dachteile (1,2) das Heckdachteil (2) in Fahrtrichtung nach vorne versetzt ablegbar ist.

2. Variabler Verdeckkasten nach Anspruch 1,
**dadurch gekennzeichnet,** daß
eine Lehne (9a,9b) der Fondsitzbank (7) zweiteilig mit einer wenigstens annähernd horizontalen Drehachse (10) ausgebildet ist, und daß bei geklappter Fondsitzbank (7) der obere Teil (9b) der Lehne einen Bodenteil des Verdeckkastens (5) bildet, während die Vorderwand des Verdeckkastens (5) bei geschlossenem Verdeck eine wenigstens annähernd horizontale Ablagefläche (11) bildet.

3. Variabler Verdeckkasten nach Anspruch 2,
**dadurch gekennzeichnet,** daß
das Faltgestänge (14) ein Parallelogramm aufweist, wobei an einer Parallelogrammseite der Drehhebel (24) angreift.

4. Variabler Verdeckkasten nach Anspruch 1 oder 2,
**dadurch gekennzeichnet,** daß
im hinteren Bereich der Ablagefläche (11) ein Rollokasten (13) angeordnet ist, und daß das freie Ende eines Rollos (12) abnehmbar mit einem Überrollbügel (4) verbunden ist.

5. Variabler Verdeckkasten nach Anspruch 4,
**dadurch gekennzeichnet,** daß
das Rollo (12) bei geschlossenem Verdeck ein Sonnenrollo bildet.

6. Variabler Verdeckkasten nach Anspruch 4,
**dadurch gekennzeichnet,** daß
das Rollo (12) bei offenem Verdeck mit in den Verdeckkasten (5) abgelegten Dachteilen (1,2) bei aufgestelltem Überrollbügel (4) ein Windschott und bei abgeschwenktem oder eingezogenem Überrollbügel (4) eine Abdeckung für die Dachteile (1,2) bildet.

7. Variabler Verdeckkasten nach einem der Ansprüche 2 bis 4,
**dadurch gekennzeichnet,** daß
die Ablagefläche (11) als Hutablage ausgebildet ist.
